# FASCICULE DE BREVET EUROPEEN

(11) **EP 0 738 077 B1**
(45) Date de publication et mention de la délivrance du brevet: **08.12.1999**
(21) Numéro de dépôt: 96400797.5
(22) Date de dépôt: 12.04.1996
(51) Int. Cl.: H04N 5/74, G03B 21/10

(54) **Téléviseur ou moniteur vidéo compact du type à rétroprojection**
Kompakter Rückprojektionsvideomonitor bzw. -fernseher
Compact video monitor or TV of the rear-screen type

(30) Priorité: 13.04.1995 FR 9504479
(43) Date de publication de la demande: 16.10.1996
(73) Titulaire: THOMSON multimedia, 92648 Boulogne Cédex (FR)
(72) Inventeur: Marcellin-Dibon, Eric, 92050 Paris la Defense Cedex (FR)
(74) Mandataire: Ruellan-Lemonnier, Brigitte

(56) Documents cités:
- US-A- 5 142 373
- PATENT ABSTRACTS OF JAPAN vol. 17, no. 153 (P-1510), 25 Mars 1993 & JP-A-04 320229 (DAINIPPON PRINTING CO LTD), 11 Novembre 1992,
- PATENT ABSTRACTS OF JAPAN vol. 14, no. 8 (P-987), 10 Janvier 1990 & JP-A-01 257834 (ASAHI OPTICAL CO LTD), 13 Octobre 1989,
- PATENT ABSTRACTS OF JAPAN vol. 11, no. 209 (E-521), 7 Juillet 1987 & JP-A-62 030483 (MATSUSHITA), 9 Février 1987,
- PATENT ABSTRACTS OF JAPAN vol. 8, no. 105 (P-274), 17 Mai 1984 & JP-A-59 015925 (MITSUBISHI), 27 Janvier 1984,

## Description

L'invention concerne un téléviseur ou moniteur vidéo du type à rétroprojection.

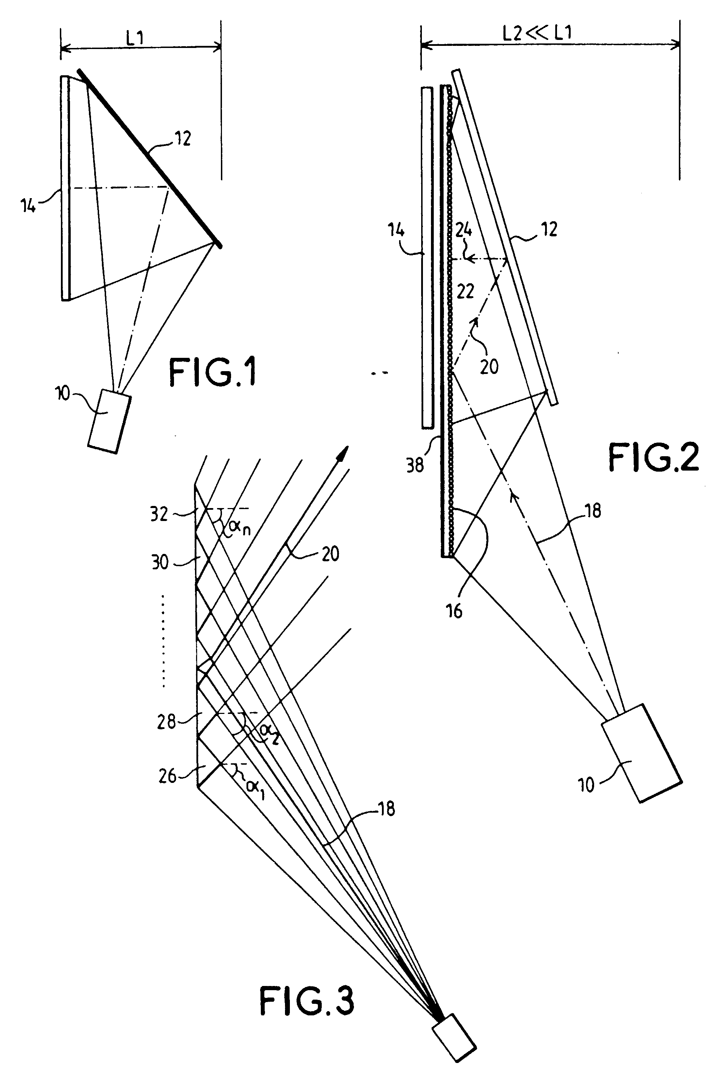

Les écrans vidéo de grande dimension, typiquement de plus d'un mètre (**40** pouces) de diagonale, utilisent de manière connue des systèmes optiques à rétroprojection tels que celui illustré figure **1** où un projecteur vidéo, généralement un projecteur **10** comprenant un afficheur à cristaux liquides éclairé par transparence par une source lumineuse, projette son faisceau sur un miroir incliné **12**, qui renvoie celui-ci vers un écran translucide **14** sur lequel se forme l'image à visualiser. Cette configuration utilisant un miroir de renvoi est nécessaire pour éviter un encombrement prohibitif de l'appareil ; le projecteur **10** peut en effet être logé dans un socle rehaussant l'écran **14** et enfermant en outre les divers circuits électroniques et les haut-parleurs du téléviseur.

Il n'en demeure pas moins que la profondeur **L**_{**1**} d'un tel système reste cependant relativement élevée, de l'ordre de **45** cm pour un écran **16/9** de **106** cm (**42** pouces) de diagonale. La profondeur **L**_{**1**} est en effet déterminée par l'angle d'inclinaison du miroir **12** par rapport à la verticale, de l'ordre de 40°.

En tout état de cause, ces systèmes connus, malgré leur compacité relative par rapport à des tubes cathodiques, restent cependant très encombrants, et ne peuvent se comparer aux épaisseurs extrêmement réduites des systèmes de visualisation du type à "écran plat".

L'un des buts de la présente invention est de proposer un téléviseur ou moniteur vidéo du type à rétroprojection dont le système optique présente une profondeur très inférieure à celle des systèmes connus.

On verra par exemple que, grâce à la configuration de l'invention, la profondeur d'un système optique pour écran **16/9** de **106** cm (**42** pouces) de diagonale peut être réduite à **25** cm, permettant donc son intégration dans un coffret beaucoup plus logeable, pouvant même être fixé à un mur, ce que ne permettent bien évidemment pas les systèmes connus compte tenu de leur profondeur excessive.

À cet effet, l'invention propose un téléviseur ou moniteur vidéo du type précité à rétroprojection, c'est-à-dire dans lequel un projecteur forme une image observable sur un écran de visualisation par rétroéclairement après réflexion sur un miroir de renvoi comportant, à proximité immédiate de l'écran de visualisation et parallèlement à celui-ci, un écran réflexo-transmissif comprenant une surface de Fresnel, le projecteur, l'écran réflexo-transmissif et le miroir de renvoi étant configurés entre eux en un système optique tel que l'écran réflexo-transmissif réfléchisse les rayons directement issus du projecteur en direction du miroir de renvoi et laisse passer ces rayons après leur réflexion sur ce miroir de renvoi, caractérisé en ce que la surface de Fresnel comporte des stries à section triangulaire, ces stries formant localement prismes et étant propres à réfléchir les rayons qui les frappent lorsque l'angle d'incidence des rayons est supérieur à une valeur prédéterminée et à laisser passer au travers les rayons dans le cas contraire.

Selon un certain nombre de caractéristiques avantageuses :
- le demi-angle au sommet de chaque prisme à l'endroit de la face d'entrée du faisceau lumineux est sensiblement égal à l'angle d'incidence du faisceau issu du projecteur à l'endroit où celui-ci frappe cette face d'entrée ;
- le demi-angle au sommet de chaque prisme à l'endroit de la face de sortie du faisceau lumineux est sensiblement égal à l'angle d'incidence du faisceau issu du projecteur soit à l'endroit où celui-ci frappe la face d'entrée de ce prisme, soit à l'endroit où celui-ci frappe la face d'entrée d'un prisme adjacent ou décalé d'un nombre entier de prismes, l'épaisseur de l'écran réflexo-transmissif étant choisie de manière que les rayons pénétrant par ladite face d'entrée sortent essentiellement tous par ladite face de sortie ;
- il est prévu en outre un écran diffuseur placé à proximité immédiate de l'écran réflexo-transmissif et propre à rabattre sensiblement dans une même direction de vision les rayons issus de l'écran réflexo-transmissif après traversée de celui-ci ;
- les stries de la surface de Fresnel sont des stries curvilignes en forme d'arcs de cercles concentriques centrés à l'endroit de l'image virtuelle du foyer de projection après réflexion sur l'écran réflexo-transmissif.

D'autres caractéristiques et avantages de l'invention apparaîtront à la lecture de la description ci-dessous, faite en référence aux dessins annexés.

La figure **1**, précitée, illustre la structure d'un système optique de rétroprojection de l'art antérieur.

La figure **2** est homologue de la figure **1**, pour le système optique selon l'invention.

La figure **3** illustre la variation des angles d'inclinaison des stries de Fresnel en fonction de l'angle d'incidence du faisceau sur l'écran.

Les figures **4** et **5** illustrent la manière dont la mise en place d'un écran diffusant permet de rabattre vers l'avant les rayons lumineux émis par la surface de Fresnel du système de l'invention.

La figure **6** est une vue agrandie de la surface de Fresnel montrant la manière dont sont réfléchis les rayons incidents.

La figure **7** est homologue de la figure **6**, pour une surface de Fresnel présentant une épaisseur plus importante.

La figure **8** est une vue perspective montrant la manière dont sont définies les stries curvilignes de la surface de Fresnel.

La figure **9** est une vue frontale de cette même surface.

Sur la figure **2**, on a représenté schématiquement la configuration du système optique de rétroprojection selon l'invention.

Le projecteur **10**, qui est généralement un projecteur comportant un afficheur à cristaux liquides éclairé par transparence, est orienté de manière à diriger son faisceau non pas vers le miroir **12** (comme dans la configuration de l'art antérieur illustrée figure **1**) mais vers un écran spécifique **16**, que l'on appellera par la suite "écran réflexo-transmissif" ou "écran à surface de Fresnel" situé à proximité immédiate de l'écran de visualisation **14** et parallèlement à celui-ci. Ainsi, le projecteur **10** est tourné vers le haut et vers l'avant, et non, comme dans l'art antérieur, vers l'arrière (sauf à prévoir un miroir de renvoi supplémentaire entre le projecteur et l'écran réflexo-transmissif).

L'écran réflexo-transmissif **16** est une surface portant des stries curvilignes à section triangulaire, formant une surface de Fresnel tournée en direction des rayons incidents (c'est-à-dire sur la face opposée à celle tournée vers l'écran de visualisation **14**). Cette surface, comme on l'expliquera plus en détail par la suite, présente la propriété d'être, selon l'angle d'incidence des rayons lumineux, soit réfléchissante (pour un angle d'incidence élevé), soit transmissive (pour un angle d'incidence faible).

De plus, le choix d'une surface de Fresnel comme écran réflexo-transmissif présente l'avantage d'une quasi-insensibilité des propriétés optiques à la longueur d'onde, à la polarisation et à l'angle d'incidence, donc des propriétés optiques telles que l'image ne sera pratiquement pas affectée de façon visible par la réflexion ni par la traversée de la surface de Fresnel.

Un rayon lumineux **18** émis par le projecteur **10** vient tout d'abord frapper la surface de Fresnel avec un angle d'incidence élevé, et il est donc réfléchi par cette dernière, comme illustré en **20**, en direction du miroir de renvoi **12** qu'il vient frapper en **22**, pour être renvoyé en **24** vers la surface de Fresnel avec un angle d'incidence très faible. Le rayon **24** va donc traverser l'écran réflexo-transmissif **16** en direction de l'écran de visualisation **14**.

Dans cette configuration, l'angle d'inclinaison du miroir **12** par rapport à la verticale, qui est égal au complément de l'angle maximum d'incidence des rayons lumineux émis par le projecteur en direction de l'écran réflexo-transmissif **16**, est notablement inférieur à ce qu'il était dans la configuration de l'art antérieur à réflexion unique (comparer avec la figure **1**).

En pratique, le projecteur **10** est positionné par rapport à l'écran réflexo-transmissif **16** de manière que l'angle d'incidence des rayons inférieurs soit légèrement supérieur à l'angle critique du matériau utilisé pour l'écran réflexo-transmissif **16**, typiquement un angle d'incidence de **45°** pour un angle critique de **42°** d'un écran en résine acrylique. Avec une divergence de faisceau de ± **17,5°** dans le plan vertical, l'angle d'incidence atteint ainsi **80°** environ au sommet de l'écran **16**.

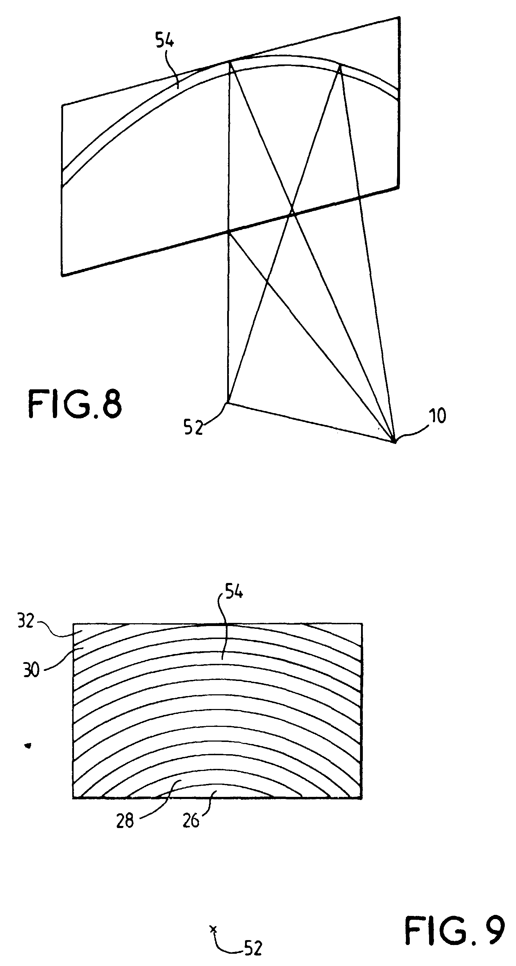

L'écran réflexo-transmissif **16** est une surface de Fresnel comportant une multitude de stries à section triangulaire, curvilignes (on verra, en décrivant les figures **8** et **9**, comment la courbure de ces stries curvilignes est définie dans le plan suivant lequel elles s'étendent), chaque strie agissant à la manière un prisme à l'égard des rayons qui la frappent.

Compte tenu de la variation de l'angle d'incidence du faisceau entre la partie inférieure et la partie supérieure de l'écran réflexo-transmissif **16**, il est nécessaire de faire varier l'angle de chaque prisme de façon progressive d'une strie à la suivante (par mesure de simplicité, on appellera "angle du prisme" la valeur du demi-angle au sommet formé par la facette de la strie située du côté des rayons incidents, par rapport à la normale à la surface de l'écran).

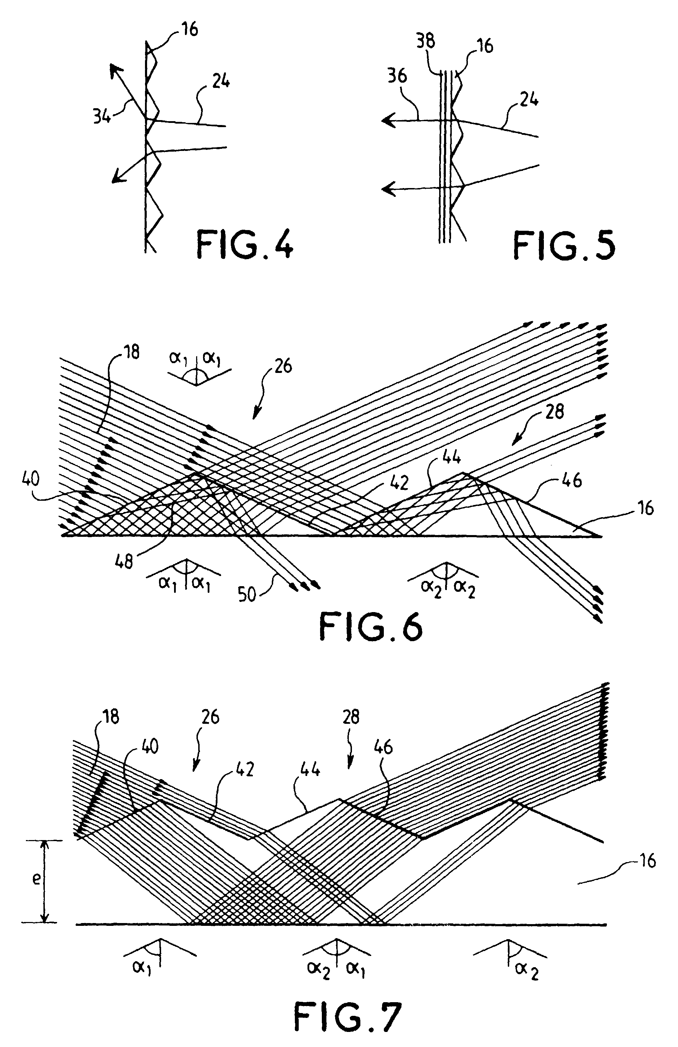

Cette variation de l'angle des prismes est illustrée figure **3**, à une échelle très agrandie (en pratique, le pas des stries est très faible, de l'ordre de 0,2 mm, afin de ne pas provoquer d'effets visibles sur l'image). Du bas vers le haut, les stries successives **26, 28 ... 30, 32** ont des angles de prisme α_{**1**}, α_{**2**}, ... α_{**n**} croissants et égaux à l'angle d'incidence du rayon lumineux frappant la strie. De ce fait, on minimise les pertes lumineuses en évitant que des zones de l'écran ne viennent intercepter le faisceau en empêchant leur réflexion, comme on le verra plus en détail sur la figure **6** explicitée plus bas.

Les diverses stries ont chacune, en section, la forme d'un triangle isocèle (figure **6**) ou sensiblement isocèle (figure **7**, voir plus bas), c'est-à-dire que l'angle de la face d'entrée du prisme est égal ou sensiblement égal à l'angle de la face de sortie du même prisme. Ainsi, la surface de Fresnel peut dévier les rayons incidents à forte incidence de la même manière que le ferait un miroir plan ; le rayon incident **18** émis par le projecteur est ainsi renvoyé en **20** après avoir frappé la surface de Fresnel **16**.

Après une seconde réflexion sur le miroir de renvoi **12**, les rayons **24** viennent à nouveau frapper la surface de Fresnel de l'écran réflexo-transmissif **16**, mais avec un angle d'incidence beaucoup plus faible, et traversent donc cet écran **16**. L'écran réflexo-transmissif **16** étant placé dans le plan focal, le passage du faisceau au travers des prismes n'affecte pas la qualité de l'image.

Néanmoins, compte tenu de la présence des prismes, ces rayons vont être déviés vers le haut ou vers le bas (selon le point d'incidence) lors de leur traversée, comme illustré en **34** sur la figure **4**.

Pour rabattre ces rayons **34** vers le spectateur dans la direction **36**, on place contre l'écran réflexo-transmissif **16**, du côté de la face de sortie, un écran diffusant **38** tel que ceux utilisés classiquement pour les projections d'images par transparence. En variante, on peut également prévoir une surface de Fresnel complémentaire, c'est-à-dire une surface semblable à celle de l'écran réflexo-transmissif **16** mais placée dos à dos avec cette dernière, en ménageant bien entendu un espace d'air intercalaire.

On a représenté figure **6** un détail agrandi de la surface de Fresnel montrant deux stries consécutives **26, 28** et la manière dont les rayons incidents sont réfléchis par celles-ci.

Dans l'hypothèse de la figure **6**, l'épaisseur de l'écran réflexo-transmissif **16**, hors prismes, est très faible et pratiquement négligeable. La strie **26** a un angle α_{**1**} égal à l'angle d'incidence des rayons **18** du faisceau qui la frappe en **40**, ces rayons quittant la face opposée du prisme en **42** avec un angle de réflexion valant également α_{**1**}. La strie adjacente **28**, d'angle α_{**2**} légèrement supérieur à α_{**1**} (pour correspondre à l'angle d'incidence des rayons sur la face d'entrée **44**), reçoit les rayons qui n'ont pas frappé la face d'entrée **40** de la strie **26** et renvoie ces derniers vers la face de sortie **46.** La face de sortie **42** ayant le même angle que la face d'entrée **40,** les rayons qui ne frappent pas la face **40** ne sont pas occultés et viennent donc tous frapper la face d'entrée **44** de la strie adjacente **28** pour être renvoyés par celle-ci vers la face de sortie **46** de cette dernière.

Lors de la traversée de la face d'entrée, par exemple de la face d'entrée **40** de la strie **26**, la réfraction secondaire renvoie certains rayons en **48** vers la face de sortie **42** mais, ces rayons ayant par rapport à cette surface un angle d'incidence élevé, ne traversent pas celle-ci et sont réfléchis vers l'arrière en **50.** Compte tenu de la nature du matériau, cette réflexion secondaire est cependant très réduite et ne vient pas perturber l'image délivrée au spectateur.

La figure **7** illustre le cas où l'écran réflexo-transmissif **16** présente une épaisseur e non négligeable par rapport à la hauteur des stries. Dans ce cas, on choisit cette épaisseur e de manière qu'un rayon frappant, par exemple, la face d'entrée **40** d'une strie **26** soit réfléchi, non par la face de sortie **42** de cette même strie, mais par la face de sortie **46** de la strie adjacente **28**, qui aura alors le même angle α_{**1**} que la face d'entrée **40** de la strie **26**. Pour une épaisseur encore plus importante, on choisira la valeur précise de l'épaisseur pour que les rayons frappant la face d'entrée d'une strie soient réfléchis par la face de sortie située deux stries plus loin, ou trois stries plus loin, etc.

La figure **8** montre, en perspective, l'aspect d'une strie isolée, référencée **54**, de l'écran réflexo-transmissif **16**. Le point **52** est l'image virtuelle du foyer de projection du projecteur **10** après réflexion sur l'écran **16**, et chaque strie est une strie curviligne en forme d'arc de cercle centré sur ce point **52**.

La figure **9** montre, en vue frontale, l'aspect de ces stries successives, toutes concentriques.

On peut par exemple réaliser, conformément aux enseignements de l'invention, un téléviseur ou moniteur vidéo à rétroprojection à écran **16/9** de **106** cm (**42** pouces) de diagonale présentant les caractéristiques optiques et dimensionnelles suivantes :
- profondeur **L**_{**2**} = **25** cm (au lieu de **L**_{**1**} = **45** cm avec un système classique pour un écran de mêmes dimensions) ;
- distance de l'objectif du projecteur **10** à l'écran : **800** mm ;
- dimension de la pupille de l'objectif de projection : **15** mm;
- écran réflexo-transmissif en matériau acrylique d'indice de réfraction **1,49** ;
- dimensions de l'écran réflexo-transmissif **16** : hauteur **710** mm, largeur **930** mm ;
- centre de courbure des stries (point **52** de la figure **8**) situé **240** mm au-dessous du bord inférieur de l'écran réflexo-transmissif **16** ;
- pas des stries : **0,2** mm.

## Revendications

1. Un téléviseur ou moniteur vidéo du type à rétroprojection, dans lequel un projecteur **(10)** forme une image observable sur un écran de visualisation **(14)** par rétroéclairement après réflexion sur un miroir de renvoi **(12)**, comportant, à proximité immédiate de l'écran de visualisation et parallèlement à celui-ci, un écran réflexo-transmissif **(16)** comprenant une surface de Fresnel, le projecteur, l'écran réflexo-transmissif et le miroir de renvoi étant configurés entre eux de manière à former un système optique tel que l'écran réflexo-transmissif réfléchisse les rayons **(18)** directement issus du projecteur en direction du miroir de renvoi et laisse passer ces rayons **(24)** après leur réflexion sur ce miroir de renvoi, caractérisé en ce que la surface de Fresnel comporte des stries **(26, 28 - 30, 32)** à section triangulaire, ces stries formant localement prismes et étant propres à réfléchir les rayons qui les frappent lorsque l'angle d'incidence des rayons est supérieur à une valeur prédéterminée et à laisser passer au travers les rayons dans le cas contraire.

2. Le téléviseur ou moniteur vidéo de la revendication **1**, dans lequel le demi-angle au sommet de chaque prisme à l'endroit de la face d'entrée **(40, 44)** du faisceau lumineux est sensiblement égal à l'angle d'incidence (α_{**1**}, α_{**2**}, ...) du faisceau issu du projecteur à l'endroit où celui-ci frappe cette face d'entrée **(40, 44).**

3. Le téléviseur ou moniteur vidéo de la revendication **2**, dans lequel le demi-angle au sommet de chaque prisme à l'endroit de la face de sortie **(42, 46)** du faisceau lumineux est sensiblement égal à l'angle d'incidence (α_{**1**}, α_{**2**}, ...) du faisceau issu du projecteur à l'endroit où celui-ci frappe la face d'entrée **(40, 44)** de ce prisme.

4. Le téléviseur ou moniteur vidéo de la revendication **2**, dans lequel le demi-angle au sommet de chaque prisme à l'endroit de la face de sortie **(46)** du faisceau lumineux est sensiblement égal à l'angle d'incidence (α_{**1**}, α_{**2**}, ...) du faisceau issu du projecteur à l'endroit où celui-ci frappe la face d'entrée d'un prisme adjacent **(40)** ou décalé d'un nombre entier de prismes, l'épaisseur (e) de l'écran réflexo-transmissif étant choisie de manière que les rayons pénétrant par ladite face d'entrée sortent essentiellement tous par ladite face de sortie.

5. Le téléviseur ou moniteur vidéo de la revendication **1**, comprenant en outre un écran diffuseur **(38)** placé à proximité immédiate de l'écran réflexo-transmissif et propre à rabattre sensiblement dans une même direction de vision **(36)** les rayons **(24)** issus de l'écran réflexo-transmissif **(16)** après traversée de celui-ci.

6. Le téléviseur ou moniteur vidéo de la revendication 1, dans lequel les stries de la surface de Fresnel sont des stries curvilignes en forme d'arcs de cercles concentriques **(54)** centrés à l'endroit de l'image virtuelle **(52)** du foyer de projection après réflexion sur l'écran réflexo-transmissif.

## Patentansprüche

1. Fernsehgerät oder Videomonitor mit Rückwärtsprojektion, bei dem ein Projektor (10) durch Rückwärtsbeleuchtung nach einer Reflexion über einen Umlenkspiegel (12) ein sichtbares Bild auf einem Bildschirm (14) erzeugt, enthaltend in unmittelbarer Nähe des Bildschirms und parallel zu diesem einen reflektierenden-durchlässigen Schirm (16) mit einer Fresnel-Oberfläche, wobei der Projektor, der reflektierende-durchlässige Schirm und der Umlenkspiegel derart zueinander angeordnet sind, daß sie ein optisches System bilden, bei dem der reflektierendedurchlässige Schirm das Strahlenbündel (18), das direkt von dem Projektor in Richtung des Umlenkspiegels gelangt, reflektiert und das Strahlenbündel (24) nach seiner Reflexion auf dem Umlenkspiegel durchläßt, dadurch gekennzeichnet, daß die Fresnel-Oberfläche Stege (26, 28-30, 32) mit einem dreieckförmigen Querschnitt enthält, daß die Stege örtlich Prismen bilden und geeignet sind, auf sie auftreffende Strahlenbündel zu reflektieren, wenn der Einfallswinkel des Strahlenbündels größer ist als ein vorbestimmter Wert, und im entgegengesetzten Fall das Strahlenbündel durchzulassen.

2. Fernsehgerät oder Videomonitor nach Anspruch 1, wobei der Halbwinkel am Gipfel jedes Prismas an der Auftrefffläche (40, 44) des Lichtstrahls im wesentlichen gleich dem Einfallswinkel (α₁, α₂, ...) des Strahlenbündels von dem Projektor an der Stelle ist, wo dieses auf die Auftrefffläche (40, 44) auftrifft.

3. Fernsehgerät oder Videomonitor nach Anspruch 2, wobei der Halbwinkel am Gipfel jedes Prismas an der Stelle der Austrittsfläche (42, 46) des Strahlenbündels im wesentlichen gleich einem Einfallswinkel (α₁, α₂, ...) des Strahls von dem Projektor an der Stelle ist, wo dieser auf die Auftrefffläche (40, 44) des Prismas auftrifft.

4. Fernsehgerät oder Videomonitor nach Anspruch 2, bei dem der Halbwinkel am Gipfel jedes Prismas an der Stelle der Austrittsfläche (46) des Strahlenbündels im wesentlichen gleich dem Auftreffwinkel (α₁, α₂, ...) des Strahlenbündels von dem Projektor an der Stelle ist, wo dieser auf die Auftrefffläche eines angrenzenden Prismas (40) auftrifft oder um eine ganze Zahl von Prismen versetzt ist, und wobei die Dicke (e) des reflektierenden-durchlässigen Schirms so gewählt ist, daß die über die genannte Auftrefffläche eintretenden Strahlenbündel im wesentlichen alle über die Austrittsfläche austreten.

5. Fernsehgerät oder Videomonitor nach Anspruch 1, enthaltend außerdem einen Streuschirm (38), der in unmittelbarer Nähe des reflektierenden-durchlässigen Schirms angeordnet und in der Lage ist, die Strahlenbündel (24) von dem reflektierenden-durchlässigen Schirm (16) nach dem Durchtritt durch diesen im wesentlichen in dieselbe Betrachtungsrichtung (36) umzulenken.

6. Fernsehgerät oder Videomonitor nach Anspruch 1, bei dem die Stege der Fresnel-Oberfläche in der Form von konzentrischen Kreisbögen gekrümmte Stege (54) sind, die an der Stelle des virtuellen Bildes (52) des Projektionsbrennpunktes nach der Reflexion auf den reflektierenden-durchlässigen Schirm zentriert sind.

## Claims

1. A television set or video monitor of the backprojection type, in which a projector (10) forms a viewable picture on a display screen (14) by backlighting after reflection on a return mirror (12), having, in immediate proximity to the display screen and parallel thereto, a reflection/transmission screen (16) comprising a Fresnel surface, the projector, the reflection/transmission screen and the return mirror being configured relative to one another so as to form an optical system such that the reflection/transmission screen reflects the rays (18) directly output by the projector in the direction of the return mirror and transmits these rays (24) after they have been reflected on this return mirror, characterized in that the Fresnel surface has striations (26, 28 - 30, 32) with triangular cross section, these striations locally forming prisms and being capable of reflecting the rays which strike them when the angle of incidence of the rays is greater than a predetermined value and of transmitting through the rays otherwise.

2. The television set or video monitor of Claim 1, in which the half-angle at the vertex of each prism at the position of the light beam's input face (40, 44) is substantially equal to the angle of incidence (α₁, α₂, ...) of the beam output by the projector at the position where it strikes this input face (40, 44).

3. The television set or video monitor of Claim 2, in which the half-angle at the vertex of each prism at the position of the light beam's output face (42, 46) is substantially equal to the angle of incidence (α₁, α₂, ...) of the beam output by the projector at the position where it strikes the input face (40, 44) of this prism.

4. The television set or video monitor of Claim 2, in which the half-angle at the vertex of each prism at the position of the light beam's output face (46) is substantially equal to the angle of incidence (α₁, α₂, ...) of the beam output by the projector at the position where it strikes the input face of a prism (40) which is adjacent or offset by a whole number of prisms, the thickness (e) of the reflection/transmission screen being chosen so that the rays entering through the said input face essentially all emerge through the said output face.

5. The television set or video monitor of Claim 1, furthermore comprising a diffuser screen (38) which is placed in immediate proximity to the reflection/transmission screen and is capable of deviating, substantially in the same viewing direction (36), the rays (24) output by the reflection/transmission screen (16) after having passed through it.

6. The television set or video monitor of Claim 1, in which the striations of the Fresnel surface are curved striations in the form of arcs of concentric circles (54) centred at the position of the virtual image (52) of the projection focus after reflection on the reflection/transmission screen.
